# FASCICULE DE BREVET EUROPEEN

(11) **EP 2 259 421 B1**
(45) Date de publication et mention de la délivrance du brevet: **04.01.2012**
(21) Numéro de dépôt: 10155883.1
(22) Date de dépôt: 09.03.2010
(51) Int. Cl.: H02P 9/08, H02P 9/10, H02P 9/48

(54) **Procédé de contrôle de la charge progressive d'un alternateur de véhicule automobile**
Verfahren zur Steuerung der progressiven Belastung einer Lichtmaschine eines Kraftfahrzeugs
Method for controlling the progressive charge of an automobile alternator

(30) Priorité: 17.04.2009 FR 0952511
(43) Date de publication de la demande: 08.12.2010
(73) Titulaire: Valeo Equipements Electriques Moteur, 94046 Créteil Cedex (FR)
(72) Inventeur: Fourmy, Stéphane, 94400 VITRY SUR SEINE (FR); Ly, Sokha, 75013 PARIS (FR); Hazard, Philippe, 94000 CRETEIL (FR)

(56) Documents cités:
- US-A1- 2003 178 973
- US-A1- 2007 085 511
- US-A1- 2007 085 512
- US-A1- 2008 191 482

## Description

L'invention concerne un procédé de contrôle de la charge progressive d'un alternateur d'un véhicule automobile, destiné à produire une tension d'alimentation électrique du réseau de bord de celui-ci en réponse à un courant d'excitation appliqué à l'alternateur.

Des procédés de contrôle de la charge progressive d'un alternateur de véhicule automobile sont déjà connus.

La fonction de charge progressive dans un alternateur permet notamment d'éviter le calage du moteur thermique lorsque celui-ci fonctionne à basse vitesse, particulièrement en régime de ralenti, et que des charges électriques importantes sont activées dans le véhicule.

La fonction de charge progressive prévient un calage du moteur thermique en interdisant un accroissement rapide du couple prélevé sur le moteur thermique par l'alternateur en cas d'enclenchement d'une charge électrique importante. Pour cela, des variations importantes du courant d'excitation appliquées sur le rotor de l'alternateur sont limitées par la fonction de charge progressive.

Par exemple, en considérant une variation de charge électrique de 50 Ampères sous 15 Volts, soit 750 Watts, avec un rendement alternateur de 50%, la variation de puissance mécanique prélevée sur le moteur est de 1500 Watts et représente environ 13% de la puissance fournie en régime de ralenti par un moteur thermique de puissance moyenne. Une telle variation de charge peut dans certains cas provoquer un calage du moteur thermique.

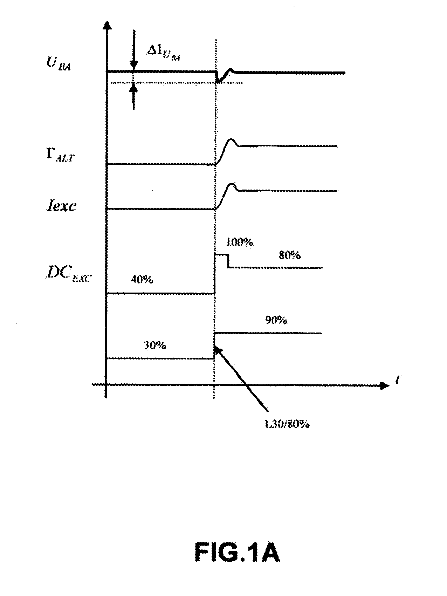

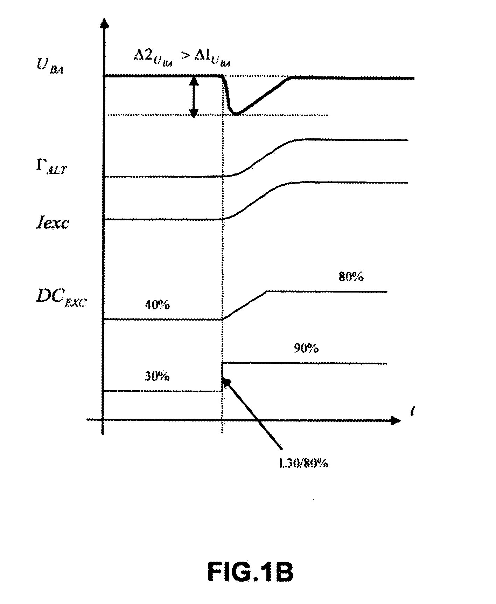

Les Figs.1A et 1B mettent en évidence des avantages et inconvénients apportés par la fonction de charge progressive dans le contrôle de l'alternateur. Ces figures correspondent à une situation dans laquelle l'alternateur fonctionne à une vitesse constante dans une plage de vitesse d'alternateur dans laquelle la fonction de charge progressive est activée, à savoir, une vitesse comprise entre N_{ALT} = 0 tr/mn à N_{ALT} = N_{ALT-S}. Au-delà de la vitesse N_{ALT-S}, par exemple N_{ALT-S} = 3000 tr/mn (soit un régime moteur de 1000 tr/mn environ), la fonction de charge progressive est inhibée car la moteur thermique développe alors une puissance suffisante pour éliminer tout risque de calage.

La Fig.1A montre les effets sur le couple Γ_{ALT} prélevé par l'alternateur sur le moteur thermique et sur la tension régulée U_{BA} fournie par l'alternateur lors par exemple d'une variation de charge électrique L30/90 sur un alternateur, c'est-à-dire de 30% à 90% de la puissance nominale de l'alternateur, dans un alternateur non équipé de la fonction de charge progressive.

Comme cela apparaît à la Fig.1A, lorsque intervient la variation de charge L30/90, une boucle de régulation de la tension U_{BA}, prévue dans l'alternateur, provoque une forte augmentation du rapport cyclique DC_{EXC} d'un courant d'excitation lexc de type PWM (pour « Pulse Width Modulation » en terminologie anglaise) qui alimente une bobine d'excitation de rotor de l'alternateur.

Dans l'exemple de la Fig.1A, ce rapport cyclique passe de 40 à 80% en passant par un pic de 100%, et la valeur moyenne continue (montrée à la Fig.1A) du courant d'excitation lexc subit une variation brutale qui est répercutée sur le couple Γ_{ALT} prélevé par l'alternateur sur le moteur thermique. Une telle variation brutale est susceptible de provoquer un calage du moteur thermique.

Par contre, sans la fonction de charge progressive, la boucle de régulation fonctionne pleinement pour maintenir la tension U_{BA} à sa valeur de consigne. Il en découle une faible variation Δ1_{UBA} de la tension U_{BA} grâce à la forte variation autorisée du courant d'excitation lexc et consécutivement du couple Γ_{ALT} prélevé.

La Fig.1B montre les effets sur le couple Γ_{ALT} prélevé par l'alternateur sur le moteur thermique et sur la tension régulée U_{BA} fournie par l'alternateur lors par exemple d'une variation de charge électrique L30/90 sur un alternateur, c'est-à-dire de 30% à 90% de la puissance nominale de l'alternateur, dans un alternateur équipé de la fonction de charge progressive.

Comme cela apparaît à la Fig.1B, lorsque apparaît la variation de charge L30/90, la variation du rapport cyclique DC_{EXC} de 40 à 80% intervient en « douceur » du fait de l'action de la fonction de charge progressive. Il en découle que le courant d'excitation lexc et le couple Γ_{ALT} varient de manière progressive et le moteur thermique n'est pas sollicité de façon brutale, ce qui minimise le risque de calage du moteur thermique.

Par contre, avec la fonction de charge progressive, du fait de la limitation de la variation du rapport cyclique DC_{EXC}, la boucle de régulation de la tension U_{BA} est « bridée » et il apparaît une variation sensible Δ2_{UBA} de la tension U_{BA} lors de la variation de charge L30/90.

Cette variation sensible de la tension U_{BA} est un des inconvénients connus de la fonction de charge progressive et peut provoquer certains désagréments notamment dans des situations de variations périodiques de la charge de l'alternateur.

Par exemple, une situation de variation périodique de la charge de l'alternateur intervient lorsque les feux de détresse du véhicule sont activés. Ces variations périodiques de la charge de l'alternateur introduisent une variation périodique de la tension U_{BA} et consécutivement, par exemple, une perturbation visuelle dans les faisceaux lumineux des projecteurs d'éclairage du véhicule lorsque ceux-ci sont activés.

Il est connu dans la technique antérieure, par exemple les documents suivants: US 2007/085511, US 2007/085512, US 2003/178973 et US 2008/191482, des gestions particulières de la fonction de charge progressive dans ces situations de commutation périodique de la charge de l'alternateur.

De manière générale, ces solutions de la technique antérieure font appel à l'utilisation d'un signai intermédiaire RCP dit « de retour de charge progressive » qui définit une valeur maximale autorisée du rapport cyclique DC_{EXC}. Lors d'une commutation croissante de charge, la valeur du rapport cyclique DC_{EXC} est actualisée à la valeur du signal RCP. L'évolution du signal de retour de charge progressive RCP est gérée dans le temps par la fonction de charge progressive. Cette gestion autorise certains sauts du rapport cyclique DC_{EXC} pour les commutations croissantes de charge intervenant après une première commutation croissante de charge de manière à limiter des variations de tension ultérieures intervenant après la première variation de tension Δ1_{UBA}.

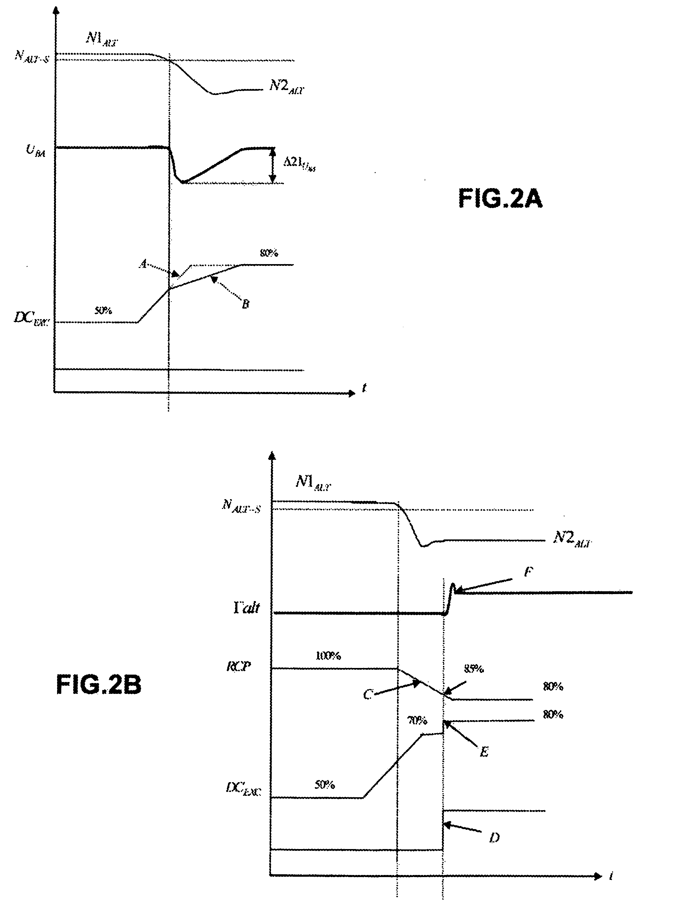

Les Figs.2A et 2B montrent un fonctionnement de la charge progressive dans une situation dans laquelle la vitesse N_{ALT} de l'alternateur chute et passe d'une vitesse N1_{ALT}, pour laquelle la fonction de charge progressive n'est pas active, à une vitesse N2_{ALT} inférieure de la vitesse N_{ALT-S} et pour laquelle la fonction de charge progressive s'enclenche et limite le rapport cyclique DC_{EXC}. Une telle situation se produit par exemple lors d'un ralentissement du véhicule lorsque intervient une opération de freinage.

Comme montré à la Fig.2A, l'accroissement du rapport cyclique DC_{EXC} commandé par la boucle de régulation, consécutivement à la chute de vitesse et à la baisse de tension corrélative, est limité selon la portion de courbe B par la fonction de charge progressive, ce qui conduit à une chute significative, Δ21_{UBA}, de la tension U_{BA}. Sans l'action de la fonction de charge progressive, l'accroissement du rapport cyclique DC_{EXC} commandé par la boucle de régulation aurait évolué selon la portion de courbe A et aurait conduit à une chute de la tension U_{BA} sensiblement inférieure.

La Fig.2B montre le comportement de l'alternateur lorsque la fonction de charge progressive comporte l'utilisation d'un signal intermédiaire RCP définissant une valeur maximale autorisée du rapport cyclique DC_{EXC}.

Comme le montre la Fig.2B, dans une telle situation, tant que la vitesse de rotation N_{ALT}=N1_{ALT} de l'alternateur est supérieure à la vitesse de seuil N_{ALT-S}, le rapport cyclique DC_{EXC} autorisé par le signal intermédiaire RCP est à sa valeur maximum, soit 100%.

Lorsque la vitesse N_{ALT} passe en dessous du seuil N_{ALT-S}, une décroissance linéaire (portion repérée C) du signal intermédiaire RCP, selon une pente prédéterminée par la fonction de charge progressive, est commandée de manière à imposer une limite supérieure à l'évolution du rapport cyclique DC_{EXC}. Dans les solutions connues, en l'absence d'accroissement de la charge électrique, cette décroissance du signal RCP se poursuit jusqu'à se stabiliser à la valeur effective du rapport cyclique DC_{EXC}. Ainsi, lorsqu'une sollicitation de charge supplémentaire intervient après cette stabilisation, aucun saut du rapport cyclique DC_{EXC} ne devrait être autorisé, puisque la valeur maximale du rapport cyclique DC_{EXC}, donnée par le signal RCP, est égale à la valeur actuelle du rapport cyclique DC_{EXC}. Le rapport cyclique DC_{EXC} ne pourra alors croître que selon une pente de charge progressive déterminée et imposée par le signal RCP afin d'éviter un accroissement brutal du couple Γ_{ALT}.

La Fig.2B montre une situation possible avec les solutions de la technique antérieure, selon laquelle un accroissement D de la charge électrique intervient après une stabilisation (à 70% dans cet exemple) du rapport cyclique DC_{EXC} alors que la valeur (85% dans cet exemple) du signal RCP n'a pas encore rejoint la valeur stabilisée (70%) du rapport cyclique DC_{EXC}. Dans un tel cas, la fonction de charge progressive autorise un saut E du rapport cyclique DC_{EXC} compte tenu que le signal intermédiaire RCP a une valeur (85% dans cet exemple) qui est supérieure à la valeur stabilisée (70%) du rapport cyclique DC_{EXC} à l'instant où intervient l'accroissement D de la charge électrique. Dans cet exemple, la valeur du rapport cyclique DC_{EXC} passe de 70% à 80% et se stabilise ensuite à cette valeur.

Dans cette situation, comme montré à la Fig.2B, le couple Γ_{ALT} subit un accroissement brutal F pouvant provoquer un calage du moteur thermique, alors que la fonction de charge progressive est active.

De manière plus générale, la situation ci-dessus d'un accroissement brutal F pourrait également se produire dans des cas de variations de régime moteur intervenant à l'intérieur de la plage de vitesse d'alternateur dans laquelle la fonction de charge progressive est activée, sans nécessité d'un retour de la vitesse N_{ALT} dans la plage d'activation de la charge progressive comme dans l'exemple ci-dessus.

Il apparaît donc nécessaire de proposer un perfectionnement de la fonction de charge progressive dans un alternateur de façon à éviter un calage possible du moteur thermique dans la situation où un accroissement de la charge électrique intervient alors que le signal intermédiaire de retour de charge progressive n'a pas encore atteint une valeur stabilisée du rapport cyclique du courant d'excitation de l'alternateur.

Selon un premier aspect, la présente invention fournit un procédé de contrôle de la charge progressive d'un alternateur d'un véhicule automobile, l'alternateur comprenant un stator, un rotor muni d'un bobinage d'excitation, des moyens de régulation de tension agissant sur un courant d'excitation fourni au bobinage d'excitation pour réguler une tension de sortie de l'alternateur et des moyens de contrôle de charge progressive déterminant, à travers une limitation du courant d'excitation à une valeur maximale, un couple mécanique maximal que l'alternateur est susceptible de prélever sur un moteur thermique du véhicule automobile, le couple mécanique maximal étant déterminé en fonction d'une vitesse de rotation de l'alternateur, les moyens de contrôle de charge progressive comportant un signal dit de retour de charge progressive indiquant la valeur maximale que peut prendre le courant d'excitation. Conformément à l'invention, lorsque ladite vitesse de rotation (N_{ALT}) de l'alternateur revient dans un régime de basse vitesse provoquant une enclenchement de la charge progressive, après un régime de vitesse plus élevée dans lequel la fonction n'était pas enclenchée, et le courant d'excitation prend une valeur stabilisée après une période de croissance, le signal de retour de charge progressive est actualisé de manière à indiquer une valeur de courant maximale du courant d'excitation égale à ladite valeur stabilisée.

Selon une mode de réalisation particulier du procédé selon l'invention, le courant d'excitation est un signal de type à largeur d'impulsion variable et le signal de retour de charge progressive indique la valeur de courant maximale à travers un rapport cyclique maximal du courant d'excitation.

Selon une autre caractéristique, le signal de retour de charge progressive est actualisé de manière à indiquer un rapport cyclique maximal dudit courant d'excitation égal à un rapport cyclique stabilisé correspondant à ladite valeur stabilisée.

Selon encore une autre caractéristique, le signal de retour de charge progressive indique une valeur de courant maximale décroissante lorsque la vitesse de rotation de l'alternateur décroît et entre dans une plage de vitesse de rotation dans laquelle les moyens de contrôle de charge progressive sont activés.

Selon encore une autre caractéristique, le signal de retour de charge progressive indique une valeur de courant maximale croissante lorsque l'alternateur est soumis à un accroissement de charge électrique et la vitesse de rotation de l'alternateur est dans une plage de vitesse de rotation dans laquelle les moyens de contrôle de charge progressive sont activés.

Selon un second aspect, la présente invention fournit un alternateur pour véhicule automobile comprenant un stator, un rotor muni d'un bobinage d'excitation, des moyens de régulation de tension agissant sur un courant d'excitation fourni audit bobinage d'excitation pour réguler une tension de sortie dudit alternateur et des moyens de contrôle de charge progressive. Conformément à l'invention, les moyens de contrôle de charge progressive comportent des moyens aptes à la mise en oeuvre du procédé décrit brièvement ci-dessus.

D'autres avantages et caractéristiques de la présente invention apparaîtront plus clairement à la lecture de la description ci-dessous d'un mode de réalisation de la présente invention en référence aux dessins annexés, dans lesquels :
- les Figs.1A et 1B sont des courbes montrant un exemple de fonctionnement de la charge progressive selon la technique antérieure lorsqu'un accroissement de la charge électrique intervient dans un régime de basse vitesse stabilisée ;

- les Figs.2A et 2B sont des courbes montrant un exemple de fonctionnement de la charge progressive selon la technique antérieure lorsqu'un accroissement de la charge électrique intervient lors d'un retour dans un régime de basse vitesse provoquant un enclenchement de la fonction de charge progressive, après un régime de vitesse plus élevé dans lequel la fonction n'était pas enclenchée ; et
- la Fig.3 montre des courbes pour un exemple de fonctionnement de la charge progressive selon un mode de réalisation du procédé selon l'invention.

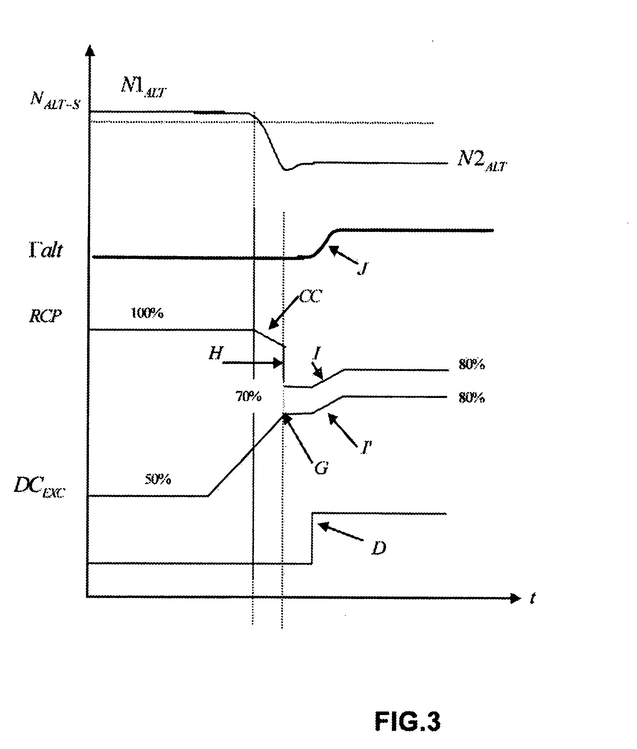

En référence à la Fig.3, il est maintenant décrit le fonctionnement de la charge progressive dans la situation de la Fig.2B décrite ci-dessus, mais avec la mise en oeuvre du procédé selon l'invention.

A la Fig.3, le signal intermédiaire RCP, initialement à la valeur de 100%, comporte une portion de décroissance CC selon une pente prédéterminée. Cette portion de décroissance CC, comme la portion C de la Fig.2B, est consécutive à une diminution de la vitesse N_{ALT}.

Parallèlement à la diminution de la vitesse N_{ALT} et à la décroissance CC du signal intermédiaire RCP, le rapport cyclique DC_{EXC} augmente consécutivement à l'action de la boucle de régulation de tension de manière à compenser l'effet de la diminution de vitesse sur la tension de sortie de l'alternateur.

Comme montré à la Fig.3, le rapport cyclique DC_{EXC} se stabilise, en fin de phase de croissance, à une valeur de 70% (portion G).

Conformément au procédé de l'invention, lorsque la valeur du rapport cyclique DC_{EXC} est stabilisée, il est procédé à une actualisation (portion H) de la valeur du signal intermédiaire RCP à la valeur stabilisée du rapport cyclique DC_{EXC}. Dans cet exemple, le signal intermédiaire RCP est donc actualisé à la valeur de 70%.

Selon l'invention, une telle actualisation de la valeur du signal intermédiaire RCP à la valeur stabilisée du rapport cyclique DC_{EXC} intervient de manière générale lorsque la vitesse de l'alternateur N_{ALT} est dans la plage de fonctionnement de la charge progressive.

Comme montré à la Fig.3, lorsque apparaît l'accroissement D de la charge électrique, le signal intermédiaire RCP s'accroît selon une pente prédéterminée de charge progressive (portion I) et autorise une augmentation progressive correspondante (portion I') du rapport cyclique DC_{EXC} (de 70% à 80% dans l'exemple de la Fig.3). Une charge progressive est ainsi imposée selon une pente prédéterminée et le couple Γ_{ALT} ne subit pas d'accroissement brutal (portion J de Γ_{ALT}), évitant ainsi un risque de calage du moteur thermique.

## Revendications

1. Procédé de contrôle de la charge progressive d'un alternateur d'un véhicule automobile, ledit alternateur comprenant un stator, un rotor muni d'un bobinage d'excitation, des moyens de régulation de tension agissant sur un courant d'excitation fourni audit bobinage d'excitation pour réguler une tension de sortie dudit alternateur et des moyens de contrôle de charge progressive déterminant, à travers une limitation dudit courant d'excitation à une valeur maximale, un couple mécanique maximal que ledit alternateur est susceptible de prélever sur un moteur thermique dudit véhicule automobile, ledit couple mécanique maximal étant déterminé en fonction d'une vitesse de rotation (N_{ALT}) dudit alternateur, lesdits moyens de contrôle de charge progressive comportant un signal dit de retour de charge progressive (RCP) indiquant ladite valeur maximale que peut prendre ledit courant d'excitation (lexc), **caractérisé en ce que** lorsque ladite vitesse de rotation (N_{ALT}) de l'alternateur revient dans un régime de basse vitesse provoquant un enclenchement de la charge progressive, après un régime de vitesse plus élevée dans lequel la fonction n'était pas enclenchée, et ledit courant d'excitation prend une valeur stabilisée (G) après une période de croissance, ledit signal de retour de charge progressive (RCP) est actualisé (H) de manière à indiquer une valeur de courant maximale dudit courant d'excitation égale à ladite valeur stabilisée.

2. Procédé selon la revendication 1, **caractérisé en ce que** ledit courant d'excitation est un signal de type à largeur d'impulsion variable et ledit signal de retour de charge progressive indique ladite valeur de courant maximale à travers un rapport cyclique maximal dudit courant d'excitation,

3. Procédé selon la revendication 2, **caractérisé en ce que** ledit signal de retour de charge progressive est actualisé de manière à indiquer un rapport cyclique maximal dudit courant d'excitation égal à un rapport cyclique stabilisé correspondant à ladite valeur stabilisée.

4. Procédé selon l'une quelconque des revendications 1 à 3, **caractérisé en ce que** ledit signal de retour de charge progressive indique une valeur de courant maximale décroissante (CC) lorsque ladite vitesse de rotation dudit alternateur décroît et entre dans une plage de vitesse de rotation dans laquelle lesdits moyens de contrôle de charge progressive sont activés.

5. Procédé selon l'une quelconque des revendications 1 à 4, **caractérisé en ce que** ledit signal de retour de charge progressive indique une valeur de courant maximale croissante (I) lorsque ledit alternateur est soumis à un accroissement de charge électrique (D) et ladite vitesse de rotation dudit alternateur est dans une plage de vitesse de rotation dans laquelle lesdits moyens de contrôle de charge progressive sont activés.

6. Alternateur pour véhicule automobile comprenant un stator, un rotor muni d'un bobinage d'excitation, des moyens de régulation de tension agissant sur un courant d'excitation fourni audit bobinage d'excitation pour réguler une tension de sortie dudit alternateur et des moyens de contrôle de charge progressive, **caractérisé en ce que** lesdits moyens de contrôle de charge progressive comportent des moyens aptes à la mise en oeuvre du procédé selon l'une quelconque des revendications 1 à 5.

## Claims

1. Method for controlling the progressive load of an automobile alternator, said alternator comprising a stator, a rotor provided with an excitation winding, voltage regulation means acting on an excitation current supplied to said excitation winding to regulate an output voltage of said alternator and progressive load control means determining, through a limitation of said excitation current to a maximum value, a maximum mechanical torque that said alternator is likely to take from a heat engine of said automobile, said maximum mechanical torque being determined according to a speed of rotation (N_{ALT}) of said alternator, said progressive load control means comprising a so-called progressive load return signal (RCP) indicating said maximum value that said excitation current (Iexc) can take, **characterized in that**, when said speed of rotation (N_{ALT}) of the alternator returns to a low speed regime resulting in an engaging of the progressive load, after a higher speed regime in which the function was not engaged, and said excitation current takes a stabilized value (G) after a period of growth, said progressive load return signal (RCP) is updated (H) so as to indicate a maximum current value of said excitation current equal to said stabilized value.

2. Method according to Claim 1, **characterized in that** said excitation current is a signal of variable pulse width type and said progressive load return signal indicates said maximum current value through a maximum duty cycle of said excitation current.

3. Method according to Claim 2, **characterized in that** said progressive load return signal is updated so as to indicate a maximum duty cycle of said excitation current equal to a stabilized duty cycle corresponding to said stabilized value.

4. Method according to any one of Claims 1 to 3, **characterized in that** said progressive load return signal indicates a decreasing maximum current value (CC) when said speed of rotation of said alternator decreases and enters into a rotation speed range in which said progressive load control means are activated.

5. Method according to any one of Claims 1 to 4, **characterized in that** said progressive load return signal indicates an increasing maximum current value (I) when said alternator is subjected to an increase in electrical load (D) and said speed of rotation of said alternator is within a rotation speed range in which said progressive load control means are activated.

6. Alternator for automobile comprising a stator, a rotor provided with an excitation winding, voltage regulation means acting on an excitation current supplied to said excitation winding in order to regulate an output voltage of said alternator and progressive load control means, **characterized in that** said progressive load control means comprise means suitable for implementing the method according to any one of Claims 1 to 5.

## Patentansprüche

1. Verfahren zum Steuern der progressiven Last eines Wechselstromgenerators eines Kraftfahrzeugs, wobei der Wechselstromgenerator einen Stator, einen mit einer Erregungswicklung versehenen Rotor, Spannungsregulierungsmittel, die auf einen zu der Erregungswicklung gelieferten Erregungsstrom einwirken, um eine Ausgangsspannung des Wechselstromgenerators zu regulieren, und Mittel zum Steuern der progressiven Last, die über eine Begrenzung des Erregungsstroms auf einen Maximalwert ein maximales mechanisches Drehmoment bestimmen, das der Wechselstromgenerator von einer Brennkraftmaschine des Kraftfahrzeugs abgreifen kann, umfasst, wobei das maximale mechanische Drehmoment als Funktion einer Drehzahl (N_{ALT}) des Wechselstromgenerators bestimmt wird, wobei die Mittel zum Steuern der progressiven Last ein so genanntes Rückstellsignal (RCP) für die progressive Last enthalten, das den Maximalwert angibt, den der Erregungsstrom (Iexc) annehmen kann, **dadurch gekennzeichnet, dass** die Drehzahl (N_{ALT}) des Wechselstromgenerators nach einem Betrieb mit höherer Drehzahl, in dem kein Setzen der progressiven Last unter Spannung erfolgt worden ist, in einen Betrieb mit niedriger Drehzahl zurückkehrt, was ein Setzen unter Spannung auslöst, und der Erregungsstrom nach einer Anstiegsperiode einen stabilisierten Wert (G) annimmt, wobei das Rückstellsignal (RCP) für die progressive Last aktualisiert wird (H), derart, dass ein maximaler Stromwert des Erregungsstroms, der gleich dem stabilisierten Wert ist, angegeben wird.

2. Verfahren nach Anspruch 1, **dadurch gekennzeichnet, dass** der Erregungsstrom ein Signal vom Typ mit veränderlicher Impulsbreite ist und das Rückstellsignal der progressiven Last den maximalen Stromwert über ein maximales Tastverhältnis des Erregungsstroms angibt.

3. Verfahren nach Anspruch 2, **dadurch gekennzeichnet, dass** das Rückstellsignal für die progressive Last in der Weise aktualisiert wird, dass ein maximales Tastverhältnis des Erregungsstroms angegeben wird, das gleich einem stabilisierten Tastverhältnis ist, das dem stabilisierten Wert entspricht.

4. Verfahren nach einem der Ansprüche 1 bis 3, **dadurch gekennzeichnet, dass** das Rückstellsignal für die progressive Last einen abnehmenden maximalen Stromwert (CC) angibt, wenn die Drehzahl des Wechselstromgenerators abnimmt und in einen Drehzahlbereich eintritt, in dem die Mittel für die Steuerung der progressiven Last aktiviert werden.

5. Verfahren nach einem der Ansprüche 1 bis 4, **dadurch gekennzeichnet, dass** das Rückstellsignal für die progressive Last einen zunehmenden maximalen Stromwert (I) angibt, wenn der Wechselstromgenerator einem Anwachsen der elektrischen Last (D) unterliegt und die Drehzahl des Wechselstromgenerators in einem Drehzahlbereich liegt, in dem die Mittel zum Steuern der progressiven Last aktiviert sind.

6. Wechselstromgenerator für Kraftfahrzeug, der einen Stator, einen mit einer Erregungswicklung versehenen Rotor, Spannungsregulierungsmittel, die auf einen zu der Erregungswicklung gelieferten Erregungsstrom einwirken, um eine Ausgangsspannung des Wechselstromgenerators zu regulieren, und Mittel zum Steuern der progressiven Last umfasst, **dadurch gekennzeichnet, dass** die Mittel zum Steuern der progressiven Last Mittel umfassen, die das Verfahren nach einem der Ansprüche 1 bis 5 ausführen können.
